(19)

Europäisches
Patentamt
European
Patent Office
Office européen
des brevets

(11) **EP 2 407 678 A1**

(12) **EUROPEAN PATENT APPLICATION**

(43) Date of publication:
**18.01.2012 Bulletin 2012/03**

(51) Int Cl.:
*F16C 19/26* (2006.01)      *F16C 25/06* (2006.01)
*F16C 33/36* (2006.01)

(21) Application number: **11004363.5**

(22) Date of filing: **06.11.2007**

(84) Designated Contracting States:
**AT BE BG CH CY CZ DE DK EE ES FI FR GB GR HU IE IS IT LI LT LU LV MC MT NL PL PT RO SE SI SK TR**

(62) Document number(s) of the earlier application(s) in accordance with Art. 76 EPC:
**07021538.9 / 2 058 538**

(71) Applicant: **G & B Solution, besloten vennootschap met beperkte
 aansprakelijkheid
9032 Gent (Wondelgem) (BE)**

(72) Inventors:
• **Grunewald, Marc Gustaaf
  9032 Gent (DE)**
• **Bauwens, Kurt Remi
  9032 Gent (DE)**

(74) Representative: **Donné, Eddy
  Bureau M.F.J. Bockstael nv
  Arenbergstraat 13
  2000 Antwerpen (BE)**

Remarks:
This application was filed on 27-05-2011 as a divisional application to the application mentioned under INID code 62.

(54) **Roller bearing with slip preventing means**

(57)    An improved roller bearing of the type that comprises an outer ring (2) and an inner ring (3) and a plurality of rollers (4) disposed between the outer and the inner ring, the rollers (4) have at least one recessed part (6) stretching over at least a part of their axial length, whereby the outer ring (2) is provided on its radially inward surface (7) with at least one outer track (8) for co-operating with a non-recessed part (5) of the rollers (4) and the inner ring (3) is provided on its radially outward surface (9) with at least one inner track (10) for co-operating with a recessed part (6) of the rollers (4) and whereby the outer tracks (8) and the inner tracks (10) are mutually axially offset, characterised in that means are provided for preventing the rollers (4) from slipping relative to the inner and/or outer tracks (10-8), which means are formed by a toothed pinion (22) provided co-axially on one or more of the rollers (4) and meshing with a ring gear (23) provided on the inner or outer ring (2-3) of the bearing (1).

*Fig.3*

## Description

The present invention relates to a roller bearing, in particular a roller bearing comprising an outer ring and an inner ring and a plurality of rollers disposed between the outer and the inner ring.

Classical roller bearings have rollers with a continuous uninterrupted straight or curved outer surface which is in contact with an outer track formed by the radially inward surface of the outer ring and with an inner track formed by the radially outer surface of the inner ring.

With the classic bearings, the inner track and the outer track are aligned in the axial direction of the bearing.

In use, the outer and inner ring move in relation to each other and the rollers are carried along in this movement and tend to pivot around their respective geometrical axes.

Because the diameter of the outer track is larger than the diameter of the inner track, the contact point of the outer track with a particular roller will tend to move faster than the contact point of the inner track with that roller, but, since the diameter of the roller is the same at both contact points, the rotational speed of the contact points of the roller will be the same.

The difference in speed between the contact points on the tracks and the contact points on the rollers results in a structural slip, causing losses due to friction between the tracks on the inner and outer rings and the rollers.

In order to allow this structural slip, known bearing types require a minimum of constructional radial play between the parts of the bearing.

When such known bearing is subjected to a radial load, the radial play, regardless how small it may be, will result in the inner and the outer rings of the bearing shifting to eccentric positions in relation to each other, causing the bearing to be supported by only two rollers at the same time and thus leading to locally concentrated high loads on the bearing, in particular on the rollers.

This effect either limits the maximum allowable radial load of the bearing, or requires an oversized bearing in order to withstand the excessive local loads.

Moreover, the use of adequate lubricants is indispensable in order to minimise the effects of the friction due to slip.

Furthermore, radial play or tolerances are a real obstacle for realising high precision machines and tools.

Because the slip is proportional with the diameter of the rollers, this diameter of the rollers needs to be limited, thereby limiting the design possibilities of the manufacturers of bearings.

The above mentioned disadvantages can theoretically be remedied by a bearing of the type that comprises an outer ring and an inner ring and a plurality of rollers disposed between the outer and the inner ring, the rollers having at least one recessed part stretching over at least a part of their axial length, whereby the outer ring is provided on its radially inward surface with at least one outer track for co-operating with a non-recessed part of the rollers and the inner ring is provided on its radially outward surface with at least one inner track for co-operating with a recessed part of the rollers and whereby the outer tracks and the inner tracks are mutually axially offset.

With such a type of bearing, the radius of the rollers in the recessed parts at the contact points of the rollers with the inner track is smaller than the radius of the rollers in the non-recessed parts at the contact points of the rollers with the outer track, and hence the speed of these contact points on the roller can be different at the outer track and at the inner track.

By this kind of construction of the bearing, the slip between the rollers and the bearing rings can be limited or even completely eliminated during its operational use.

Because of this, frictional wear of the bearing parts will be very much reduced and the need of lubrication will also be less critical.

With the latter type of bearings, the slip can be completely eliminated when the dimensions are so chosen that the ratio of the radius of the outer track to the radius of the inner track is equal to the ratio of the radius of the non-recessed part of the roller to the radius of the recessed part of the roller.

Because the slip is completely eliminated, there is no need for a constructional play between the parts of the bearing, which is beneficial for using these bearings in high precision instruments and machines.

Also the bearing rings are always supported by the majority of the rollers and not only by two rollers. This will allow for higher loads for bearings with the same overall dimensions as the known bearings or will allow to use smaller and thus cheaper bearings for applications involving the same loads.

Furthermore, because there is no slip, the diameter of the rollers is not to be kept within certain limits, so the designers of the bearing manufactures are not restricted anymore in this respect.

Without slip, all rollers move synchronously together and keep their mutual distances apart from each other.

Therefore, the need for a cage is not critical as with known bearings to keep the rollers apart for preventing that the rollers get in contact with each other and thus causing frictional losses.

Unfortunately the above mentioned advantages are purely theoretical and are only true in ideal theoretical cases of bearings without any radial clearance, whereby all the rollers are in permanent contact with the tracks on the outer and inner rings.

However, in practice such bearings do not show up because such perfect dimensioning of a bearing is not practically possible because of the fact that manufacturing tolerances cannot be excluded.

Moreover, during use of the bearing, radial clearance can arise due to wear of the bearing and due to differential expansion of the distinct parts of the bearing caused by temperature fluctuations.

When radial clearance exists, no matter how small, the outer and inner rings will take up an eccentric position relative to each other, causing not all the rollers being simultaneously in contact with the outer and inner rings of the bearing and causing the radial load of the bearing to be supported by only two rollers.

This causes a sudden overload of the two supporting rollers and of the contact areas with the outer and inner rings.

The rolling elements will furthermore not have a continuous traction over the complete circumference of the bearing tracks, which jeopardises the synchronisation of the movement of the rollers and hence causes slip to occur.

With the existence of a radial clearance there is also a lubrication problem because a certain traction between the rollers and the tracks is needed for a synchronised movement of the rollers, whereas lubrication will decrease the necessary traction. With large accelerations or decelerations of the rollers, this problem will appear prominently due to the inertia of the rollers.

It is an objective of the invention to provide a roller bearing without one or more of the above mentioned or other disadvantages of the known roller bearings.

To this end the present invention provides for a roller bearing of the type that comprises an outer ring and an inner ring and a plurality of rollers disposed between the outer and the inner ring, the rollers have at least one recessed part stretching over at least a part of their axial length, whereby the outer ring is provided on its radially inward surface with at least one outer track for co-operating with a non-recessed part of the rollers and the inner ring is provided on its radially outward surface with at least one inner track for co-operating with a recessed part of the rollers and whereby the outer tracks and the inner tracks are mutually axially offset, whereby means are provided for preventing the rollers from slipping relative to the inner and/or outer tracks, which means are formed by a toothed pinion provided co-axially on one or more of the rollers and meshing with a ring gear provided on the inner or outer ring of the bearing.

In this way permanent and simultaneous contact will be guaranteed between all the rollers and the tracks on the inner and outer rings of the bearing.

This means that the theoretical advantages of said known type of bearing with mutually axially offset outer and inner tracks can now also be achieved in real situations where the bearing is subject to radial clearance due to tolerances or is subject to develop such clearance due to wear and/or thermal expansion of its composing parts.

The means for preventing slip provide for a perfectly synchronised movement of the rollers even with rapid accelerations and decelerations of the rollers responsible for large inertia forces on the rollers.

Therefore the use of a cage to hold the distance between rollers becomes obsolete.

Optionally, the means for preventing slip can be combined with means to eliminate the radial clearance in the bearing.

In all cases adequate lubrication can be provided for because with the means for preventing slip there is no need anymore for a good traction of the rollers over the tracks on the rings of the bearing.

The means to eliminate the radial clearance are preferably such that they do not generate additional radial forces between the composing parts of the bearing.

This can for instance be realised by means to eliminate the radial clearance in the form of an actuator controlled by a control circuit provided with a sensor for determining the clearance in the bearing and controlling the actuator for maintaining a pre-set clearance which is a zero clearance or a very small clearance, whereby the control circuit stops activating the actuator when the clearance reaches the pre-set value and restarts activating the actuator when the clearance deviates from the pre-set value.

According to a preferred embodiment, the inner track, respectively outer track, is formed by the conical outer surface, respectively by the conical inner surface, of a conical ring which is slidably mounted in axial direction inside the outer ring, respectively outside the inner ring, to co-operate with a conical surface of the rollers, whereby the actuator is a displacement actuator allowing the axial movement of the conical ring relative to the rollers.

By activating the actuator, the ring with the roller track will be axially shifted by the control circuit relative to the rollers, whereby, due to the conical shape of the contact surfaces between the rollers and the tracks, any clearance will be permanently eliminated.

In a preferred embodiment the displacement actuator will be an element manufactured in a temperature expanding material, for instance a steel alloy, of which the axial expansion is controlled by a heating or cooling element.

An advantage of such a displacement actuator is the very accurate precision and high resolution of the displacement, as well as the high stability due to the use of an incompressible material.

In another preferred embodiment of the heat controlled displacement actuator will be a piezo-electrical element with axial expansion capacities.

Such a piëzo-element has the same advantages as a heat temperature controlled actuator, but has the additional advantage that it reacts faster to the occurrence of a clearance in the bearing because of a smaller response time.

With the intention of better showing the characteristics of the invention, hereafter, as an example without any limitative character, some preferred forms of embodiment are described of an improved roller bearing according to the invention, with reference to the accompanying drawings, wherein:

> figure 1 represents a side elevation view of an improved bearing according to the invention;
> figure 2 is a cross-sectional view according to line II-II in figure 1;
> figure 3 represents on a larger scale a detailed view of the part within the rectangle F3 in figure 2;

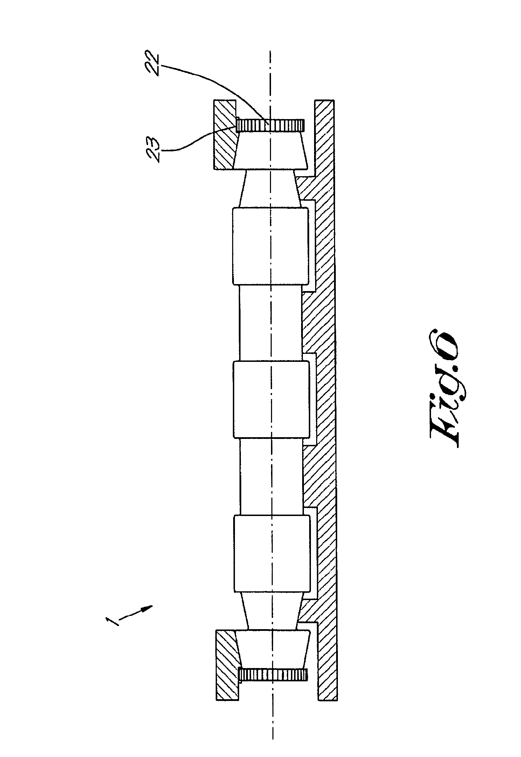

> figures 4 to 6 are cross sections like the one of figure 3, but for possible other embodiments of an improved bearing according to the invention;
> figures 7 to 11 show cross-sectional views of different embodiments of a bearing according to the invention which are all provide with means to eliminate the radial clearance in the bearing.

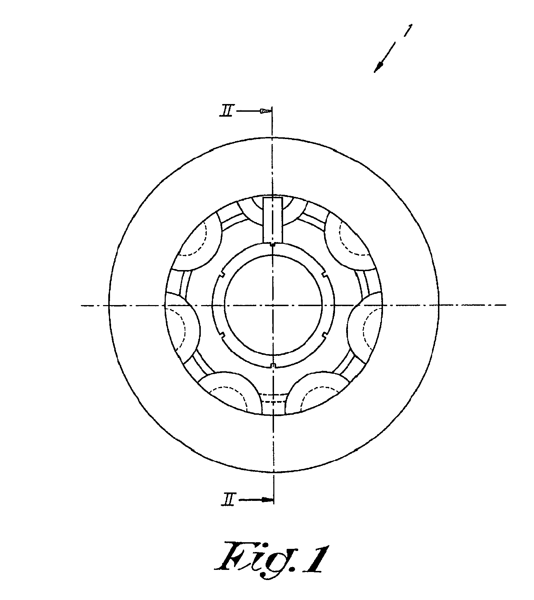

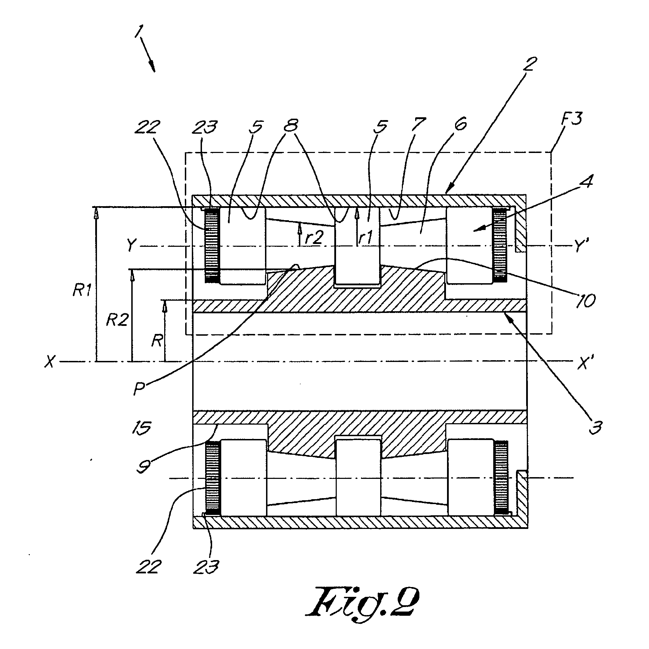

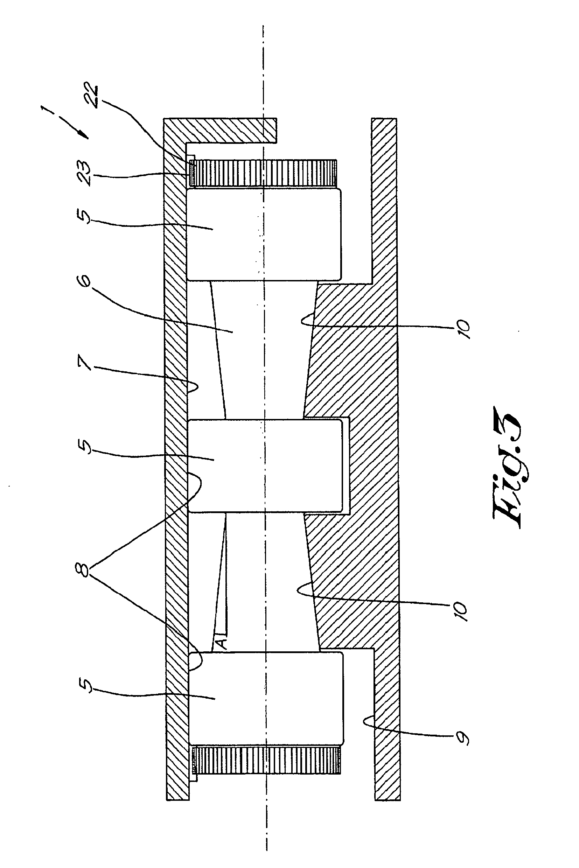

The bearing 1 represented in the figures 1 to 3 is a roller bearing with a rotational axis X-X' and with an outer ring 2 and a concentric inner ring 3 and a plurality of rollers 4 with a rotational axis Y-Y' disposed between both rings 2 and 3.

The bearing 1 is by means of an example of the type of a cylindrical roller bearing wherein the axis Y-Y' of the rollers is parallel to the axis X-X' of the bearing 1 and wherein the rollers 4 are positioned with their axes Y-Y' on a geometrical cylinder with radius RC.

The rollers 4 are in this example provided with cylindrical non-recessed parts 5 with a radius r1 and conical recessed parts 6 stretching over a part of the axial length of the roller 4 and having a radius r2 in a particular point P of its conical surface which is smaller than the radius r1 of the non-recessed parts 5.

The outer ring 2 is in this case cylindrical over its total axial length with an inner radius R1 forming on its radially inward surface 7 a plurality of cylindrical outer tracks 8, one for each of the non-recessed parts 5 of the rollers 4.

The inner ring 3 of bearing 1 has an outer diameter R and is provided on its radially outward surface 9 with conical inner tracks 10, one for each of the recessed parts 6 of the rollers 4.

Note that in the transversal plane perpendicular to the axial direction X-X' and passing through the above mentioned point P on the conical surface of the recessed part 6, the radius of the ring 11 is referenced by R2.

The conical surfaces of the inner tracks 10 are tapered in opposite directions, in particular tapering in a direction towards each other, whereby in practice the tapering angle A, enclosed between the conical surface and the axial direction X-X', is small, preferable less than 5° or even better less than 1°.

For reasons of clarity, the tapering angle A has been exaggerated schematically in the drawings.

The outer tracks 8 and the inner tracks 10 are positioned in mutually axially offset positions, so that the tracks 8 and 10 do not lie in a same plane transversal to the axial direction X-X'.

According to the invention the bearing 1 is provided with means for preventing the rollers 4 from slipping relative to the inner and/or outer tracks 10-8, whereby in this example said means are formed by a toothed pinion 22 provided co-axially on each axial extremity of all rollers 4 and meshing with a ring gear 23 provided on the outer ring 2 of the bearing 1.

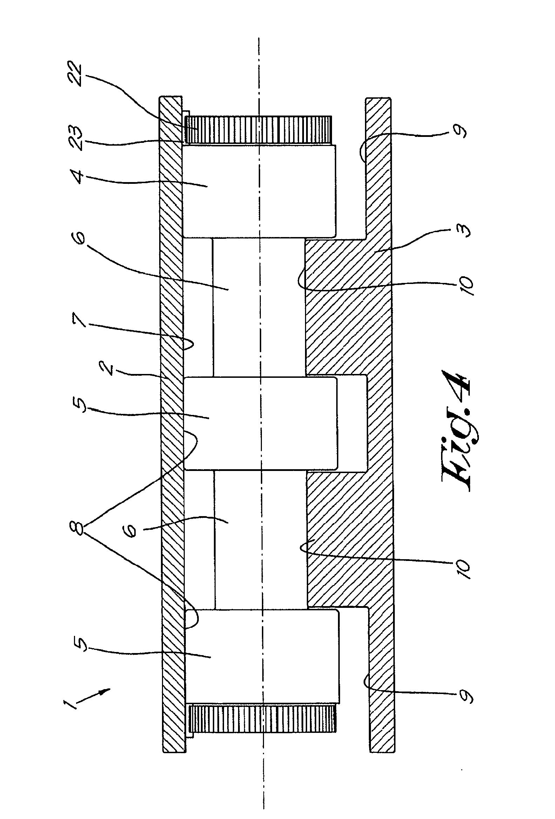

The embodiment shown in figure 4 is also provided with a ring gear 23 on the outer ring 2 of the bearing 1. However in this embodiment the recessed parts 6 of the rollers 4 are cylindrical.

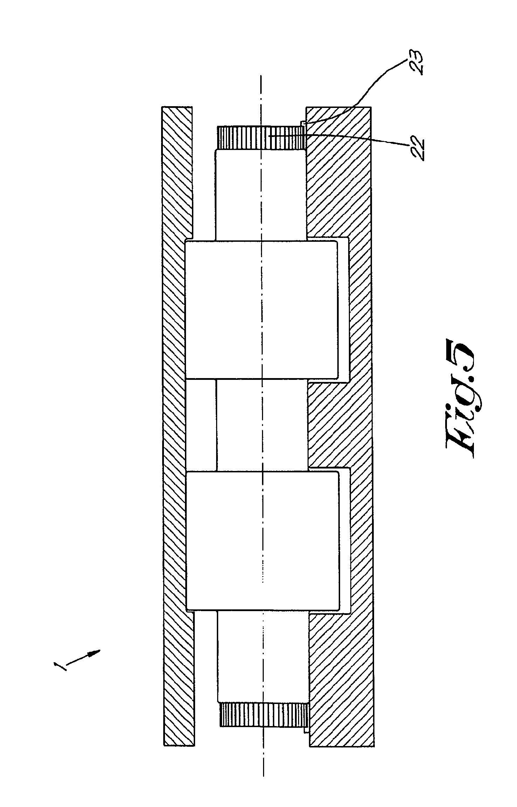

The ring gear 23 of the embodiment shown in figure 5 is provided on the inner ring 3 of the bearing 1. In this case the toothed pinion 22 provided on the rollers 4 interacts with the inner ring 3 via said ring gear 23.

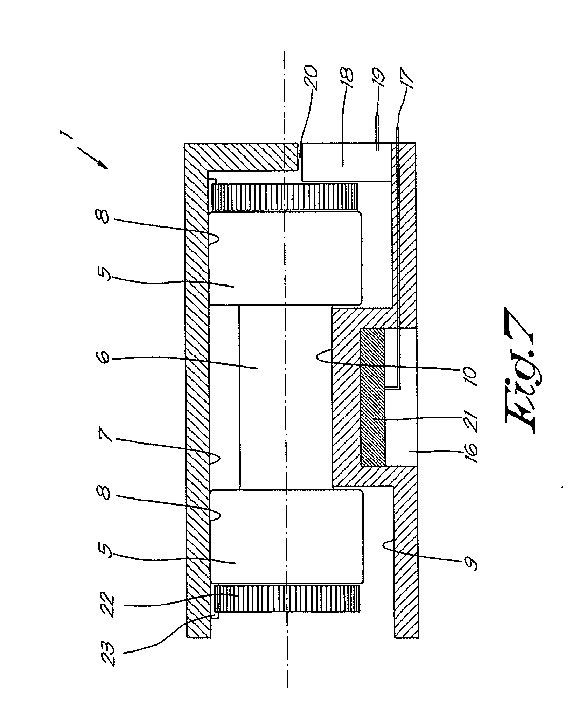

Figure 7 is another embodiment with only one recessed part 6 and two non-recessed parts 5, the parts 5 and 6 being cylindrical with a constant radius over their total length.

In this case the bearing 1 is provided with additional means to eliminate the radial clearance in the bearing 1. Said means are formed by a heat sensitive actuator 21 with incorporated heating element, allowing a radial expansion of the inner track 10 of the inner ring 3 supporting the recessed part 6 of the rollers 4.

The actuator 21 can be thermally isolated by an insulating element 16.

As a variant of this embodiment, the outer ring 2 could be provided with a cooling element allowing the outer ring to shrink in a radial direction in order to take up the clearance.

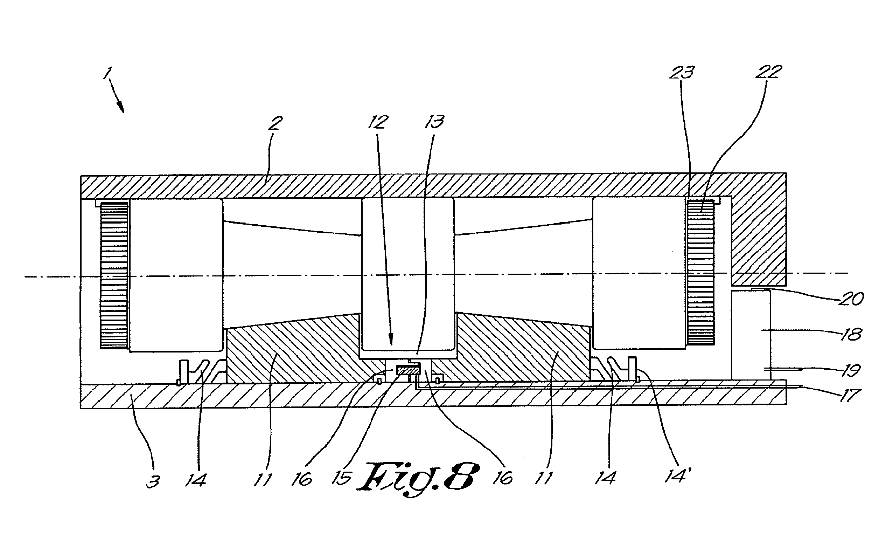

The embodiment of figure 8 is also provided with additional means 12 to eliminate the clearance of the bearing, whereby in this example these means 12 are formed by a displacement actuator located in the space 13 between slidable rings 11 and allowing to expand in the axial direction X-X' in order to push the rings 11 away from each other and move the rings 11 relative to the rollers 4, so that any clearance in the bearing 1 is eliminated by the action of the contacting conical surfaces between the rings 11 and the rollers 4.

The rings 11 are biased against the displacement actuator by means of two springs 14 which are held in a compressed state by means of two rings 14' fixed on the inner ring 3.

In the example shown, the displacement actuator is an element 15 manufactured in a temperature expanding material, of which the expansion is controlled by an integrated heating or cooling element, for instance a resistance wire, which is not shown separately in the drawings.

The element 15 is preferably a ring shaped element which is thermally isolated from the rest of the bearing by two heat insulating elements 16, preventing undesired dissipation of heat energy and allowing a better control of the expansion of the element 15.

The heat resistance of the element 15 is connected via electric wires 17 to a control circuit which is not shown apart from a sensor 18 and its electrical wire connection 19 which is fixed on the inner ring 11 for determining the clearance in the bearing 1 and controlling the axial expansion of the actuator 14 for maintaining a zero clearance, controlled by the measurement of the gap 20 between the sensor 18 and the outer ring 2.

The control circuit stops activating the actuator 15 when the clearance or the gap 20 reaches the minimum value and restarts activating the actuator 15 when the clearance or the gap 20 deviates from this minimum value so that no additional radial loads are created by the expansion of the actuator 15.

The bearing 1 is preferably dimensioned so that no slip occurs when the bearing is in operational use.

This is achieved by dimensioning the bearing such that the number of revolutions n1 that the rollers 4 make when driven without slip by a complete revolution of the outer ring 2 of the bearing 1 is equal to the number of revolutions n2 that the rollers 4 make when driven without slip by a complete revolution of the inner ring 3 of the bearing 1.

The number of revolutions n1 follows from the fact that, when the rollers 4 are driven without slip by the outer ring 2, the circumference $2\Pi.r1$ of the rollers 4 times n1 is equal to the circumference $2\Pi.R1$ of the outer tracks 8 on the outer ring 2.

This leads to the equation that $n1=R1/r1$.

Similarly the number of revolutions n2 of the rollers 4 when driven by the inner ring 3 is expressed by $n2=R2/r2$. There will be no slip when $n1=n2$ and thus when $R1/r1=R2/r2$ or similarly that $R1/R2=r1/r2$, in other words that in at least one transversal plane perpendicular to the axial direction of the bearing, the ratio of the radius R1 of the outer track 8 to the radius R2 of the inner track 10 is equal to the ratio of the radius r1 of the non-recessed part 5 of the roller 4 to the radius r2 of the recessed part 6 of the roller 4.

This equation

$$R1/r1=R2/r2$$

together with the equation that

$$RC=R1-r1=R2+r2$$

allows the calculation of all the dimensions of the bearing when two out of the four dimensions R1, R2, r1 and r2 are known.

When for example R1 and R2 are known, then r1 and r2 are calculated by the following expressions.

$$r1=R1.(R1-R2)/(R1+R2)$$

$$r2=R2.(R1-R2)/(R1+R2)$$

Such a bearing 1 dimensioned according to the above mentioned formulas will have no slip and so will have all the benefits of a bearing 1 without slip.

The dimensioning of the bearing according to the invention must not necessarily follow the above equations.

Indeed, also some decrease in slip with respect to existing bearings with fully cylindrical rollers, can be advantageously achieved by using rollers with non-recessed and recessed parts co-operating respectively with outer tracks 8 and inner tracks 10 which are mutually offset in an axial direction X-X'.

According to a preferred embodiment, the total accumulated surface of the outer tracks 8 substantially equals the total accumulated surfaces of the inner tracks 10 of the bearing 1 so that the radial forces are uniformly spread over the contact surfaces of the bearing 1.

The use and function of the means 12 to eliminate the clearance follows from the above description.

Although the outer ring 2 and the inner ring 3 are represented as single elements, it is not excluded that the elements are formed by a plurality of parts in order to facilitate assembly and disassembly of the bearing.

Although in the example the two rings 11 are slidable on the inner ring 3, it is not excluded that only one of the rings 11 is slidable whilst the other ring 11 remains fixed on the ring.

Instead of using two conical rings 11 co-operating with two recessed parts 6 of the rollers 4, it is possible also to use only one conical ring 11 slidably co-operating with a displacement actuator or one conical ring which is fixed on the inner ring 11, in which case the displacement actuator would act on the conical ring 11 or on the inner ring 3 as a whole.

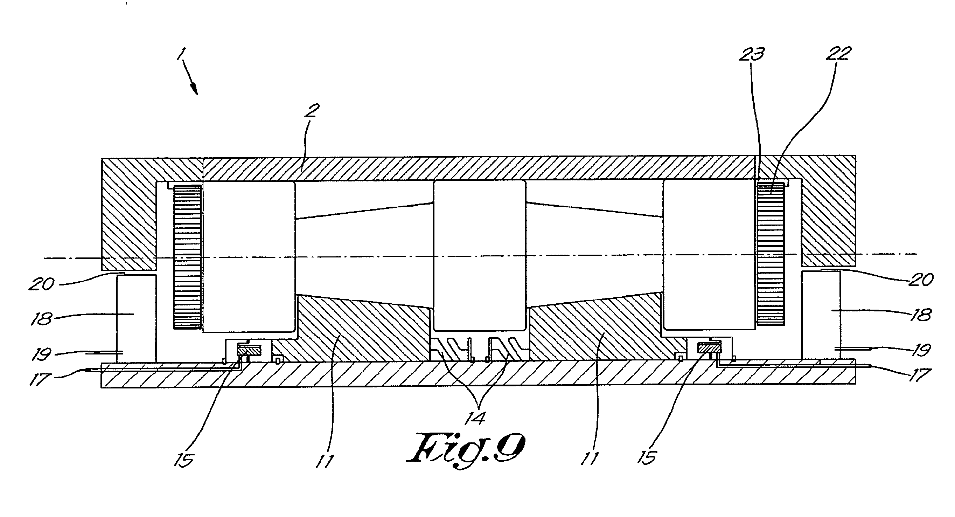

Figure 9 shows an embodiment of a bearing 1 according to the invention wherein the conical surfaces of the recessed parts 6 of the rollers 4 are tapered in an opposite direction with regard to the embodiment of figure 8, whereby in this case the means 12 for eliminating the clearance in the bearing 1 are formed by two displacement actuators 15 on each opposite axial side of the bearing 1, the slidable rings 11 being biased against the actuators 15 by two separate or by one single spring 14 mounted in the space 13 between the rings 11.

The above described embodiments are best suited for applications wherein the inner ring 3 is fixed, whilst the outer ring 2 is rotating.

In cases where the outer ring 2 is fixed and the inner ring 3 is rotatable, the following embodiments are preferred in order to prevent the use of electrical slip rings to transfer the electrical signal of the rotating sensor 18 and the control current of the rotating actuator to a stationary control circuit.

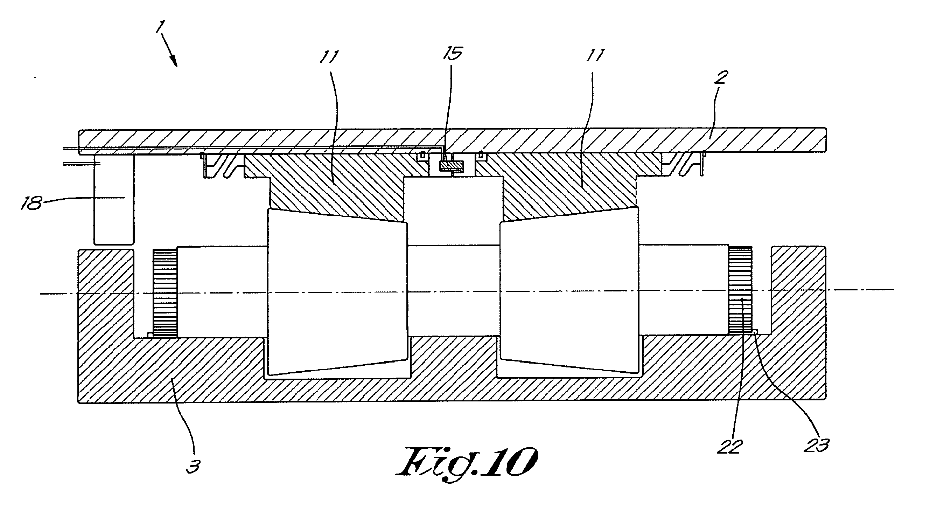

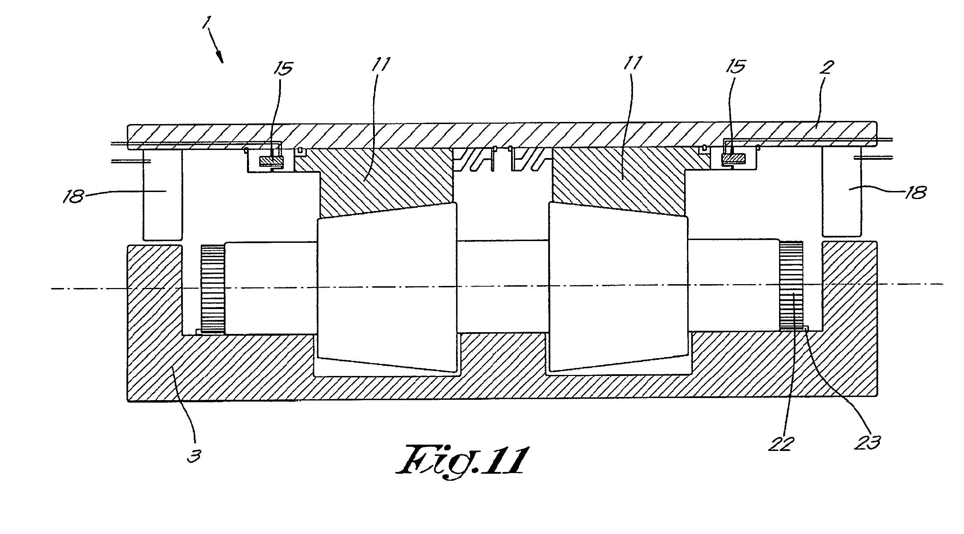

In the embodiment of figures 10 and 11, the conical slidable rings 11 and the actuators 15 are provided on the outer ring 2 instead of on the inner ring 3.

Figure 10 corresponds to an embodiment wherein, in analogy with figure 8, one central actuator 15 is used, whereas figure 11 corresponds to an embodiment with two actuators 15 and two sensors 18, each on each side of the bearing 1, similar to the situation of figure 9.

The heat activated displacement actuator 15 in each of the above described embodiments can be replaced by another type of sensitive displacement actuator with a high resolution, like a piezo-electrical actuator.

It is worth mentioning that the invention makes a cage for keeping the distance between the rollers 4 obsolete and that therefore in none of the drawings such a cage is represented.

The present invention is in no way limited to the forms of embodiment described by way of examples and represented in the figures, however, such an improved roller bearing according to the invention can be realised in various forms without leaving the scope of the invention.

**Claims**

1. An improved roller bearing of the type that comprises an outer ring (2) and an inner ring (3) and a plurality of rollers (4) disposed between the outer and the inner ring, the rollers (4) have at least one recessed part (6) stretching over at least a part of their axial length, whereby the outer ring (2) is provided on its radially inward surface (7) with at least one outer track (8) for co-operating with a non-recessed part (5) of the rollers (4) and the inner ring (3) is provided on its radially outward surface (9) with at least one inner track (10) for co-operating with a recessed part (6) of the rollers (4) and whereby the outer tracks (8) and the inner tracks (10) are mutually axially offset, **characterised in that** means are provided for preventing the rollers (4) from slipping relative to the inner and/or outer tracks (10-8), which means are formed by a toothed pinion (22) provided co-axially on one or more of the rollers (4) and meshing with a ring gear (23) provided on the inner or outer ring (2-3) of the bearing (1).

2. An improved roller bearing according to claim 1, **characterised in that** additional means (12) are provided to eliminate the radial clearance in the bearing (1).

3. An improved roller bearing according to claim 2, **characterised in that** the means (12) to eliminate the radial clearance are such that they do not generate additional radial forces between the composing parts of the

4. An improved roller bearing according to any of the previous claims, **characterised in that** the outer track (8) and the inner track (10) are either a cylindrical or a conical surface respectively co-operating with a corresponding cylindrical or conical surface of the non-recessed parts (5) and the recessed parts (6) of the rollers (4).

5. An improved roller bearing according to any of the previous claims, **characterised in that** at least one transversal plane perpendicular to the axial direction (X-X') of the bearing (1), the ratio of the radius (R1) of the outer track (8) to the radius (R2) of the inner track (10) is equal to the ratio of the radius (r1) of the non-recessed part (5) of the roller (4) to the radius (r2) of the recessed part (6) of the roller (4).

6. An improved roller bearing according to any of the claims 2 to 5, **characterised in that** the means (12) to eliminate the radial clearance in the bearing (1) are formed by an actuator (15) controlled by a control circuit provided with a sensor (18) for determining the clearance in the bearing (1) and controlling the actuator (15) for maintaining a zero clearance.

7. An improved roller bearing according to claim 6, **characterised in that** the control circuit stops activating the actuator (15) when the clearance reaches the minimum value and restarts activating the actuator (15) when the clearance deviates from this minimum value.

8. An improved roller bearing according to claim 6 or 7, **characterised in that** the actuator (15) is formed by a heating and/or cooling element (21) allowing the outer ring (2) or the inner ring (3) to be heated at least locally in order to make the outer track (8) or inner track (10) to expand or to shrink in a radial direction.

9. An improved roller bearing according to claim 6 or 7, **characterised in that** at least one inner track (10) or outer track (8) is formed of a conical surface co-operating with a conical surface of the rollers (4), whereby the actuator (15) is a displacement actuator allowing the axial displacement of the conical inner or outer track (8-10) relative to the conical surface of the rollers (4) for eliminating the clearance in the bearing (1).

10. An improved roller bearing according to claim 9, **characterised in that** an inner track (10), respectively outer track (8), is formed by the conical outer surface, respectively by the conical inner surface, of a conical ring (11) which is mounted slidably in axial direction (X-X') inside the outer ring (2), respectively outside the inner ring (3), to co-operate with a conical surface of the rollers (4), whereby the actuator (15) is a displacement actuator allowing the axial movement of the conical ring (11) relative to the rollers (4).

**11.** An improved roller bearing according to claim 9 or 10, **characterised in that** at least two inner tracks (10), respectively two outer tracks (8), are formed by the conical outer surface, respectively conical inner surface, of two conical rings (11) which are slidably mounted in axial direction (X-X') relative to each other inside the outer ring (2), respectively outside the inner ring (3), to co-operate with conical surfaces of the rollers (4), whereby the conical surfaces of the tracks (8-10) are tapered in opposite directions and whereby the actuator (15) is a displacement actuator allowing the axial movement of both conical rings (11) relative to each other.

**12.** An improved roller bearing according to any of the claims 9 to 11, **characterised in that** the angle (A) enclosed between the conical surface and the axial direction is less than 5°, preferably less than 1°.

**13.** An improved roller bearing according to any of the claims 9 to 12, **characterised in that** the displacement actuator (15) is an element manufactured in a temperature expanding material, of which the expansion is controlled by a heating or cooling element.

**14.** An improved roller bearing according to claim 13, **characterised in that** the heat controlled displacement actuator (15) is thermally isolated from the rest of the bearing by a heat insulating material.

**15.** Improved roller bearing according to any of the claims 9 to 12, **characterised in that** the displacement actuator (15) is a piezo-electrical element.

**16.** Improved roller bearing according to any of the previous claims, **characterised in that** the bearing (1) does not comprise a cage for the rollers (11).

*Fig.1*

*Fig.2*

Fig.3

10

Fig. 4

Fig.5

*Fig.6*

EP 2 407 678 A1

Fig.7

Fig.8

Fig.9

*Fig.10*

Fig.11

Europäisches
Patentamt

European
Patent Office

Office européen
des brevets

# EUROPEAN SEARCH REPORT

Application Number

EP 11 00 4363

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 629 340 A (PROVOST RICHARD R [CA] ET AL) 16 December 1986 (1986-12-16) | 1 | INV. |
| Y | * column 5, line 65 - column 6, line 50 * * column 8, line 39 - column 9, line 8 * * figures 1,2,6,6a,6b * | 2-16 | F16C19/26 F16C25/06 F16C33/36 |
| Y | WO 03/095854 A (TIMKEN CO [US]) 20 November 2003 (2003-11-20) * abstract * * figures 1,2 * | 2-16 | |
| Y | DE 12 74 450 B (ENTWICKLUNGSRING SUED G M B H) 1 August 1968 (1968-08-01) * column 1, line 1 - line 12 * * column 2, line 17 - line 34 * * column 3, line 13 - line 19 * * column 3, line 62 - column 4, line 44 * * figure 1 * | 6,7,9-12 | |
| Y | WO 2006/015048 A (TIMKEN CO [US]; GRADU MIRCEA [US]; CHRISTIAN ADAM [FR]; WESTON MARC A) 9 February 2006 (2006-02-09) * page 9, line 11 - page 10, line 31 * | 15 | TECHNICAL FIELDS SEARCHED (IPC) F16C |
| Y | DE 38 26 945 A1 (SKF GMBH [DE]) 15 February 1990 (1990-02-15) * column 2, line 5 - line 36 * | 2,3,8 | |

The present search report has been drawn up for all claims

| Place of search | Date of completion of the search | Examiner |
|---|---|---|
| Munich | 25 July 2011 | Schlossarek, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 11 00 4363

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2011

| Patent document cited in search report | | Publication date | Patent family member(s) | | Publication date |
|---|---|---|---|---|---|
| US 4629340 | A | 16-12-1986 | CA | 1241048 A1 | 23-08-1988 |
| WO 03095854 | A | 20-11-2003 | AU | 2003226266 A1 | 11-11-2003 |
| | | | US | 2003210843 A1 | 13-11-2003 |
| DE 1274450 | B | 01-08-1968 | GB | 1167070 A | 15-10-1969 |
| | | | US | 3418809 A | 31-12-1968 |
| WO 2006015048 | A | 09-02-2006 | US | 2006023985 A1 | 02-02-2006 |
| DE 3826945 | A1 | 15-02-1990 | FR | 2635286 A1 | 16-02-1990 |
| | | | GB | 2224085 A | 25-04-1990 |